# EUROPEAN PATENT APPLICATION

(11) **EP 1 296 085 A2**
(43) Date of publication of application: **26.03.2003**
(21) Application number: 02256466.0
(22) Date of filing: 18.09.2002
(51) Int. Cl.: F16H 61/14, F16H 59/22

(54) **Lockup control system for torque converter**

(30) Priority: 25.09.2001 JP 2001290562
(71) Applicant: JATCO Ltd, Fuji-shi, Shizuoka 417-8585 (JP)
(72) Inventor: Sato, Osamu, Jatco Ltd, Fuji-City, Shizuoka 417-8585 (JP); Imamura, Tatsuya, Jatco Ltd, Fuji-City, Shizuoka 417-8585 (JP); Fukasawa, Toshihide, Jatco Ltd, Fuji-City, Shizuoka 417-8585 (JP); Takatori, Kazuhro, Jatco Ltd, Fuji-City, Shizuoka 417-8585 (JP)
(74) Representative: Crump, Julian Richard John

(57) **Abstract**

A lockup control system for a torque converter of a vehicle equipped with an air conditioner. The lockup control system maintains a coasting slip restricted state of the torque converter even during coasting of the vehicle with an accelerator pedal released, for restricting slip rotation between input and output elements of the torque converter. The coasting slip restricted state is achieved by a coasting lockup capacity that is lower than a lockup capacity of the torque converter in a driving condition of the vehicle with the accelerator pedal depressed. According to the invention, the coasting lockup capacity is controlled according to an operation load of the air conditioner and increased as the operation load of the air conditioner increases.

## Description

### BACKGROUND OF THE INVENTION

### 1. Field of the Invention

The present invention relates to a lockup control system for a torque converter in an automatic transmission of a vehicle. More particularly, the present invention relates to a lockup control system adapted to suitably control the lockup capacity of the torque converter during coasting, or inertial traveling, of the vehicle with the accelerator pedal released.

### 2. Description of Related Art

An automatic transmission, inclusive of a continuously variable transmission (CVT), is generally provided with a torque converter in the power train, for multiplying torque and/or absorbing torque fluctuations. A torque converter conducts power transmission between input and output elements via an operating fluid, and thus suffers from relatively low transmission efficiency and unsatisfactory fuel consumption. In order to overcome these problems, it is a customary measure to adopt a lockup type torque converter wherein the input and output elements can be directly coupled by engaging a lockup clutch in vehicle traveling conditions wherein torque multiplying function and/or torque-fluctuation absorbing function are not required.

As another approach for improving fuel consumption of vehicles, it is also customary to provide engines with a fuel cutoff device for stopping fuel supply to the engine during coasting of the vehicle, in which an accelerator pedal is released and the driving force from the engine is not required. Such a fuel cutoff device has a fuel recovery function for resuming fuel supply to the engine, so as to prevent engine stalling upon decrease in the engine revolution speed or in the vehicle speed down to a predetermined value.

In order to achieve enhanced fuel saving effect by the fuel cutoff device, it is desirable to extend the duration of the fuel cutoff and to delay the fuel recovery as far as possible. To this end, it is a conventional measure to delay the reduction of engine revolution speed, by engaging the lockup clutch in a slip restricted state so that the slip rotation between the input and output elements of the torque converter is restricted. In this instance, if the slip restricted state is maintained even during coasting of the vehicle, engine stalling may occur due to delay in cancellation of the slip restriction such as when sudden braking is performed during coasting of the vehicle on icy road and the wheels are thereby locked.

U.S. Patent No. 5,953,043 discloses a lockup control system adapted to control engagement of the lockup clutch of the torque converter, wherein the torque converter can be locked-up with a required minimum lockup capacity or minimum lockup pressure required for achieving the slip restricted state during coasting of the vehicle. However, the required minimum lockup capacity of the lockup clutch changes significantly, depending upon the load condition of air conditioner provided for the vehicle, since the air conditioner includes a compressor that is driven by the engine and thus operatively coupled to driving wheels of the vehicle.

It may be conceivable to determine the required minimum lockup capacity so as to be optimized when the air conditioner is under high load condition or when a reverse torque (so-called coasting torque) which is transmitted from the driving wheels toward the engine during coasting of the vehicle is high. In this instance, the required minimum lockup capacity so determined would be excessively high when the coasting torque is low or when the air conditioner is under low load condition, such that cancellation of slip restriction or disengagement of the lockup clutch required upon wheel locking cannot be performed in a timely manner, thereby failing to achieve the primary function of engine stalling prevention. Further, if the required minimum lockup capacity is excessively high, even in the absence of wheel lock of the vehicle, engine torque fluctuation may be directly transmitted to the driving wheels as the accelerator pedal is depressed or released followed by fuel cutoff to the engine, thereby causing shocks in the power train and degrading driving comfort.

On the contrary, if the required minimum lockup capacity is determined so as to be optimized when the air conditioner is under low load condition or when the coasting torque is low, the required minimum lockup capacity would be insufficient when the coasting torque is high or when the air conditioner is under high load condition, giving rise to a situation wherein the engine rotation cannot be maintained by the driving wheels and tends to be lowered too quickly, thereby failing to achieve the primary function to extend the duration of fuel cutoff for improving the fuel consumption of the vehicle.

### SUMMARY OF THE INVENTION

It is therefore an object of the present invention to provide a lockup system for a torque converter, which eliminates the above-mentioned problems arising from inadequately determined coasting lockup capacity of the torque converter. The present invention is based on a novel recognition obtained from thorough research and investigations, that it would be highly effective to control the coasting lockup capacity of the torque converter in an optimized manner, depending upon the load state of the air conditioner.

Namely, the present invention provides a lockup control system for a torque converter of a vehicle that is equipped with an air conditioner, wherein the lockup control system is adapted to maintain a coasting slip restricted state of the torque converter even during coasting of the vehicle with an accelerator pedal released, for restricting slip rotation between input and output elements of the torque converter. The coasting slip restricted state is achieved by a coasting lockup capacity that is lower than a lockup capacity of the torque converter in a driving condition of the vehicle with the accelerator pedal depressed. According to the present invention, the coasting lockup capacity is controlled according to an operation load of the air conditioner and is increased as the operation load of the air conditioner increases.

In the lockup control system according to the present invention, since the torque converter is maintained in the slip restricted state even during coasting of the vehicle, it is possible to delay the lowering of the engine revolution speed by the drive wheels and to enhance the fuel saving effect by extending the duration of fuel cutoff. Moreover, since the coasting slip restricted state is achieved by a coasting lockup capacity that is smaller than a lockup capacity of the torque converter in a driving condition of the vehicle with the accelerator pedal depressed, it is possible to quickly cancel the slip restriction of the torque converter upon wheel locking, and thereby avoid engine stalling that may otherwise occur as a result of wheel locking.

In the lockup control system according to the present invention, furthermore, since the coasting lockup capacity is controlled corresponding to the operation load of the air conditioner, it is possible to eliminate the above-mentioned problems arising from inadequately determined coasting lockup capacity of the torque converter, as follows.

Namely, when the air conditioner is operating under high load condition and the reverse driving torque (coasting torque) directed from the driving wheels toward the engine is large during coasting of the vehicle, the coasting lockup capacity is correspondingly increased to a level sufficient to prevent slipping of the torque converter under the coasting torque, making it possible to ensure reverse driving of the engine by the driving wheels so as to delay lowering of the engine revolution speed and thereby achieve the primary function of extending the duration of fuel cutoff to enhance the fuel saving effect.

On the contrary, when the air conditioner is operating under low load condition and the reverse driving torque is small during coasting of the vehicle, the coasting lockup capacity is correspondingly decreased to a level that allows a timely lockup cancellation upon wheel locking, thereby achieving the primary function to prevent engine stalling. Furthermore, the decreased coasting lockup capacity serves to prevent engine torque fluctuation from being directly transmitted to the driving wheels, thereby preventing generation of shocks in the power train and maintaining the driving comfort.

It is preferred that the slip restricted state of the torque converter is a lockup state in which the slip rotation between the input and output elements of the torque converter is set to zero, and the coasting lockup capacity is a required minimum lockup capacity obtained by adding an estimated value for bringing the slip rotation to zero, to a lockup capacity with which the slip rotation becomes a predetermined slight-slip rotation. In this instance, not only the duration of fuel cutoff can be extended by virtue of the lockup of the torque converter during coasting of the vehicle, but also it is possible quickly to cancel the lockup and avoid engine stalling upon wheel locking, in a reliable manner without being affected by aging of the torque converter.

Here, the lockup capacity with which the slip rotation becomes the predetermined slight-slip rotation may be stored as a learned value for each operation load of the air conditioner, so as to be used as basis for calculation of the required minimum lockup capacity. In this way, the lockup control of the torque converter can be performed in optimum manner by the learning-control.

It is also preferred that the slip restricted state of the torque converter is a slip controlled state in which the slip rotation between the input and output elements of the torque converter is controlled to be a slip rotation other than zero, corresponding to the operating state of the vehicle, and the coasting lockup capacity is increased corresponding to increase in operation load of the air conditioner, when a coasting slip control of the torque converter with the accelerator pedal released is transferred from a driving slip control with the accelerator pedal depressed. In this instance, it is possible to achieve the functional advantages as follows:

First, since the torque converter is kept in the slip controlled state corresponding to the vehicle operating state even during coasting, it is possible to delay the lowering of the engine revolution by the drive wheels and to enhance the fuel saving effect by extending the duration of fuel cutoff. Second, since the slip controlled state is achieved by a coasting lockup capacity that is smaller than a lockup capacity when the accelerator pedal is depressed, the slip restriction upon wheel locking due to sudden braking can be quickly cancelled, thereby avoiding engine stalling due to the wheel locking. Third, since the coasting lockup capacity is increased for higher load corresponding to the operation load of the air conditioner, it is possible to extend the duration of fuel cutoff and to quickly cancel the slip controlled state upon wheel locking, thereby prevent engine stalling.

### BRIEF DESCRIPTION OF THE DRAWINGS

The present invention will be further explained below with reference to preferred embodiments shown in the accompanying drawings.

FIG. 1 is a schematic view showing a power train of a vehicle provided with a lockup control system according to the present invention.

FIG. 2 is a flowchart of the coasting lockup control executed by a lockup control system according to a first embodiment of the present invention.

FIG. 3 is an operational time chart of the coast lockup control shown in FIG. 2.

FIG. 4 is a flowchart of the coasting lockup control executed by a lockup control system according to a second embodiment of the present invention.

FIG. 5 is a flowchart of a coasting slip control executed by a lockup control system according to a third embodiment of the present invention.

FIG. 6 is a flowchart of a coasting slip control executed by a lockup control system according to a fourth embodiment of the present invention.

FIG. 7 is a flowchart of a coasting slip control executed by a lockup control system according to a fifth embodiment of the present invention.

### DETAILED DESCRIPTION OF THE PREFERRED EMBODIMENTS

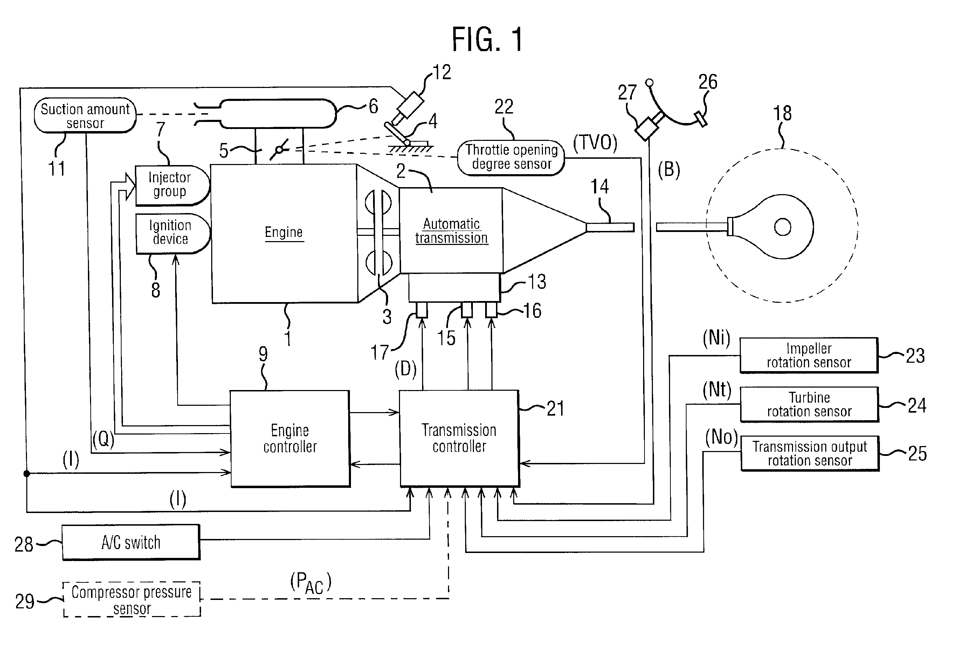

A power train of a vehicle is shown in FIG. 1 and includes an engine 1, an automatic transmission 2, and a torque converter 3 for drivingly coupling them. The torque converter 3 includes a lockup clutch (not shown) to which the lockup control system according to the present invention is applicable.

The engine 1 includes a throttle valve 5 having an opening degree that is increased by depressing an accelerator pedal 4, so as to suck an amount of air corresponding to the opening degree and the engine revolution speed, via air cleaner 6. The engine 1 further includes a group of injectors 7 provided for respective engine cylinders, an ignition device 8, as well as an engine controller 9 for controlling the injectors 7 and the ignition device 8. The engine controller 9 is supplied with a signal from a suction amount sensor 11 for detecting air suction amount Q sucked into the engine 1, and a signal I from a coasting switch 12 that is turned ON upon releasing the accelerator pedal 4.

Based on the input information, the engine controller 9 conducts fuel injection controls so that predetermined amount of fuel is injected from the injectors 7 to predetermined cylinders, respectively, depending on the operation state of the engine 1, and also conducts fuel-cutoff for stopping the fuel supply to the engine 1 or fuel recovery for resuming the fuel supply. The engine controller 9 further controls the ignition device 8 so as to ignite spark plugs for predetermined engine cylinders at predetermined timings, depending on the operating state of the engine 1 based on the input information. In this way, the engine 1 is properly operated and subjected to fuel cutoff during coasting of the vehicle with the accelerator pedal 4 released. The engine controller 9 further conducts fuel recovery when the engine revolution speed is lowered, or reduced, to a predetermined value, so as to inject a predetermined amount of fuel to the predetermined cylinders from the respective injectors 7, and to thereby prevent engine stalling.

The rotational power output from the engine 1 is transmitted to the automatic transmission 2 through the torque converter 3. The automatic transmission 2 has multiple gear ranges to be selected depending upon combined ON/OFF states of shift solenoids 15, 16 within a control valve 13. Thus, the input rotation speed of the automatic transmission 2 is changed into the output rotation speed by a gear ratio corresponding to the selected gear range, and the output rotation is transmitted from an output shaft 14 to driving wheels 18 so as to drive the vehicle.

The torque converter 3 includes an engine-driven input element or a pump impeller and an output element or a turbine runner, and transmits the rotation of the input element to the output element via internal operating fluid while multiplying torque and absorbing torque fluctuation (converter mode), so that the turbine rotation is transmitted to the automatic transmission 2. Furthermore, the torque converter 3 is provided with a built-in lockup clutch for mechanically coupling the input and output elements with each other to restrict slip rotation therebetween, including a fully locked state in which the slip rotation is zero. The engaging pressure or lockup pressure of the lockup clutch is determined by a driving duty D of a lockup solenoid 17 within the control valve 13, so that the slip rotation of the torque converter 3 is restricted by coupling the input and output elements of the torque converter with each other under an engaging force or lockup capacity corresponding to the engaging pressure.

The ON/OFF states of the shift solenoids 15, 16 and the driving duty D of the lockup solenoid 17 are controlled by a transmission controller 21. The transmission controller 21 is supplied with various input signals, including the signal I from the coasting switch 12, a signal from a throttle opening degree sensor 22 for detecting the throttle opening degree TVO, a signal from an impeller rotation sensor 23 for detecting the input rotation speed Ni of the torque converter 3, a signal from a turbine rotation sensor 24 for detecting the output rotation speed Nt of the torque converter 3, a signal from a transmission output rotation sensor 25 for detecting the rotation speed No of the transmission output shaft 14, a signal B from a brake switch 27 to be turned ON upon depressing a brake pedal 26, and an ON/OFF signal of an air conditioner switch 28 or a signal from a compressor pressure sensor 29 for detecting a compressor internal pressure P_{AC} of the air conditioner .

The transmission controller 21 conducts shift control of the automatic transmission 2 in the following manner, by known calculations based on the above-mentioned input information. First, a gear range of the automatic transmission 2 preferred for the current vehicle operating state is retrieved from a scheduled shift map, based on a vehicle speed VSP obtained from the transmission output rotation No and based on the throttle opening degree TVO. Further, the shift solenoids 15, 16 are switched on or off, so as to conduct gear change to the preferred gear range.

The transmission controller 21 further determines from the input information whether or not the automatic transmission 2 is in a lockup region which does not require torque multiplying function or and torque fluctuation absorbing function of the torque converter 3. If it is determined that the automatic transmission 2 is in a lockup region, the transmission controller 21 conducts a duty control (D) of the lockup solenoid 17 to bring the torque converter 3 into a lockup state where the input and output elements are directly coupled by engagement of the lockup clutch under an increased lockup pressure. On the contrary, if it is determined that the automatic transmission 2 is in a converter region, the transmission controller 21 conducts a duty control of the lockup solenoid 17 to bring the torque converter 3 into a converter state where the direct coupling between the input and output elements is terminated by disengaging the lockup clutch under a decreased lockup pressure.

It is assumed that bidirectional data communication is conducted between the engine controller 9 and the transmission controller 21, so as to perform fuel cutoff for the engine 1 corresponding to engagement of the lockup clutch, or to perform fuel recovery for the engine 1 corresponding to disengagement of the lockup clutch.

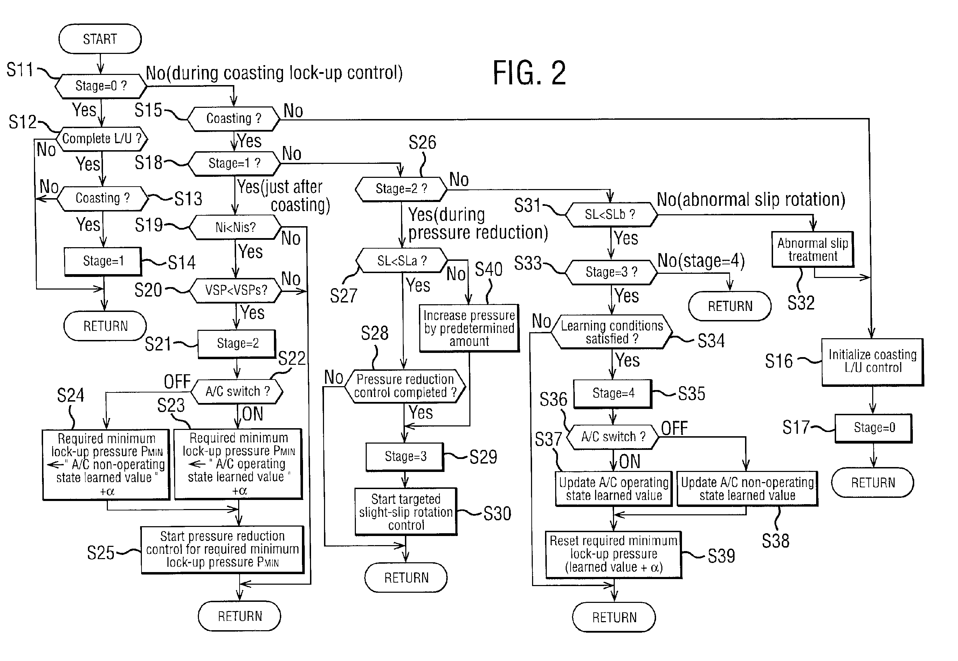

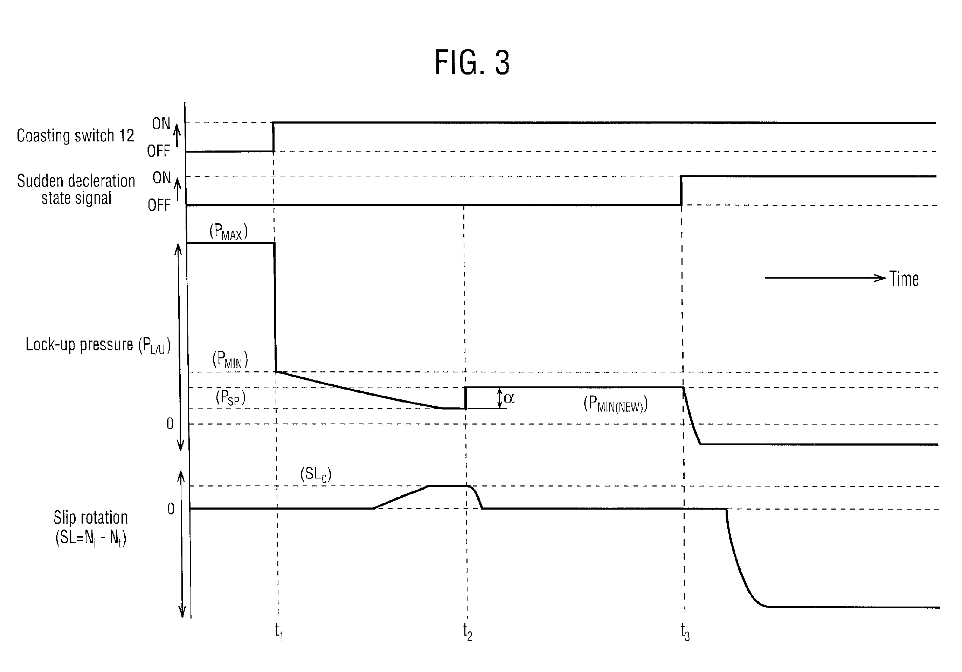

The details of the coast lockup control executed by the transmission controller 21 for the torque converter 3 will be explained below with reference to FIG. 2 and FIG. 3, including the calculating method of the required minimum lockup capacity.

First, in step S11 of FIG. 2, the current operation mode of the automatic transmission is checked, wherein the operation modes are indicated by "stage" and mutually differentiated by stage=0 to 4, as follows:
Stage=0 indicates an operation mode wherein the coasting lockup control has not yet been started;
Stage=1 indicates an operation mode wherein the coasting lockup is to be started as a result of releasing the accelerator pedal in a complete lockup state of the lockup clutch, thereby achieving coasting of the vehicle;
Stage=2 indicates an operation mode wherein the pressure reduction control of the lockup pressure is being conducted for the coasting lockup of the lockup clutch;
Stage=3 indicates an operation mode during a targeted slight-slip rotation control for establishing a slightly slipping state of the lockup clutch, upon completion of the lockup pressure reduction control for the coasting lockup and successive learning-control of a slight-slip-causing lockup capacity for calculating the required minimum lockup capacity to be used in the next pressure reduction control; and
Stage=4 indicates an operation mode to perform learning-control of the slight-slip-causing lockup capacity when the targeted slight-slip-causing state is established.

If the operation mode determined in step S11 is "stage=0", i.e., the coast lockup control has not yet been started, it is judged in step S12 whether or not the torque converter is in the complete lockup state, and it is further determined in step S13 whether or not the vehicle is coasting. If it is judged in step S12 that the torque converter is in the complete lockup state and further judged in step S13 that the vehicle is coasting, i.e., when the vehicle is coasting in the complete lockup state of the torque converter, the control has to be shifted to the coasting lockup control and stage=1 is established in step S14 to represent this situation. However, if it is judged in step S12 that the torque converter is not in the complete lockup state, or if it is judged in step S13 that the vehicle is not coasting, the coasting lockup control should not be carried out so that step S14 is skipped and the control is terminated to maintain the stage=0.

On the contrary, if the operation mode determined in step S 11 is not "stage=0", i.e., the coast lockup control has already been started, it is judged in step S15 whether or not the coasting of the vehicle is continuing. If it is judged in step S15 that the vehicle is not coasting, despite the judgment in step S11 that the coast lockup control has already been started, the coasting lockup control is initialized in step S16 such that this control is terminated and stage=0 is established in step S17 to represent this situation.

When it is determined in step S11 that the coast lockup control has already been started and it is further judged in step S15 that the coasting of the vehicle is continuing, the coast lockup control is executed as follows. First, it is judged in step S18 whether or not stage=1, i.e., whether or not the accelerator pedal has been released in the complete lockup state and the current traveling condition is just after transfer to coasting of the vehicle. If it is judged that the current traveling condition is just after the transfer, it is further judged in steps S19 and step S20 whether or not the coasting lockup conditions are satisfied in that the impeller revolution speed Ni (=engine revolution speed) < predetermined speed Nis and the vehicle speed VSP < predetermined vehicle speed VSPs.

If it is judged in steps S19 and S20 that the coasting conditions are satisfied, the pressure reduction control of the lockup pressure for the coast lockup is to be conducted as will be explained hereinafter, so that stage=2 is established in step S21 to represent this situation. Subsequently, the ON/OFF state of the air conditioner switch 28 is judged in step S22, assuming that the ON state of the switch 28 corresponds to high load condition of the air conditioner and the OFF state of the switch 28 corresponds to low load condition of the air conditioner. Depending upon the ON/OFF state of the air conditioner switch 28, a required minimum lockup pressure P_{MIN} for the coast lockup is obtained in step S23 or step S24. Here, the required minimum lockup pressure signifies a lockup pressure minimally required for maintaining the torque converter in the lockup state during coasting of the vehicle. The required minimum lockup pressure can be obtained in the manner to be described below, by learning the lockup pressure with which the targeted slight-slip rotation of the torque converter is caused from the complete lockup state, and by adding to the learned lockup pressure a predetermined value α that is determined so that the above-mentioned slip rotation is just eliminated.

Namely, in the ON state of the air conditioner switch 28 (i.e., high load condition of the air conditioner), the required minimum lockup pressure P_{MIN} is obtained in step S23 by adding the predetermined value α to that learned value for the air conditioner operating among the learned lockup pressures. In the OFF state of the air conditioner switch 28 (i.e., low load condition of the air conditioner), the required minimum lockup pressure P_{MIN} is obtained in step S24 by adding the predetermined value α to that learned value for the air conditioner non-operating state among the learned lockup pressures. In either case, the control proceeds to step S25 where the pressure reduction control is started to reduce the lockup pressure toward the required minimum lockup pressure P_{MIN} obtained as explained above.

With reference to a situation where the accelerator pedal 4 is released and the traveling condition is transferred from the lockup state to coasting at instant t₁ shown in FIG. 3, the above-mentioned pressure reduction control corresponds to a pressure reduction of the lockup pressure P_{L/U} at the instant t₁ from the maximum value P_{MAX} down to the required minimum lockup pressure P_{MIN}. However, the torque converter maintains the complete lockup state even under such pressure reduction, as can be appreciated from the foregoing description. Meanwhile, if it is determined in step S19 or S20 that the coasting lockup conditions are not satisfied, steps S21 through S25 are skipped so that the above-mentioned pressure reduction control is not executed.

When it is judged in step 18 that the stage is other than stage=1, i.e., the current traveling condition is not just after transfer to coasting, the control proceeds to step S26 where it is judged whether or not stage=2, i.e., whether or not the pressure reduction control of the lockup pressure P_{L/U} toward the required minimum lockup pressure P_{MIN} for the coasting lockup is being conducted. If it is judged in step S26 that the pressure reduction control is being conducted, the control proceeds to step S27 where it is judged whether or not the slip rotation SL (=Ni-Nt) is less than a predetermined value SLa. If it is judged in step S27 that the slip rotation SL is less than the predetermined value SLa, the control proceeds to step S28 where it is judged whether or not the pressure reduction control in step S25 has been completed.

If it is judged in step S28 that the pressure reduction control in step S25 is not completed, the control is terminated as it is, so as to continue the pressure reduction control. The control proceeds to steps S29 and S30, upon completion of the pressure reduction control. Meanwhile, if it is judged in step S27 that the slip rotation SL is not less than the predetermined value SLa, the control proceeds to step S40 where an excessive slip is eliminated by increasing the lockup pressure P_{L/U} by a predetermined amount so that the control proceeds to steps S29 and S30 without judging in step S28 whether or not the pressure reduction control has been completed.

In step S29, stage=3 is established to indicate that the pressure reduction control is completed. In step S30, the targeted slight-slip rotation control is started. This control is to lower the lockup pressure P_{L/U} in the manner as can be seen from the instant t₁ onward of FIG. 3, such that the slip rotation SL is brought to coincide with a targeted slight-slip rotation SLo in FIG. 3 which has been determined to detect that slipping of the torque converter has started.

When it is judged in step S26 that the current stage is other than stage=2 (i.e., the current stage is either stage=3 or stage=4), the control proceeds to step S31 where it is judged whether or not the slip rotation SL is less than a predetermined value SLb. If it is judged in step S31 that the slip rotation SL is not less than the predetermined value SLb, the control proceeds to step S32 where an abnormal slip treatment is conducted. Then, the control proceeds to the above-mentioned steps S16 and S17, and is the terminated. If it is judged in step S31 that the slip rotation SL is less than the predetermined value SLb, the control proceeds to step S33 where it is judged whether or not the current stage is stage=3, i.e., whether or not the targeted slight-slip rotation control in step S30 has been started. If it is judged in step S33 that the targeted slight-slip rotation control in step S30 has been started, the control proceeds to step S34 where it is judged whether or not the conditions for learning-controlling the slight-slip (SLo)-causing lockup pressure are satisfied, i.e., whether or not the targeted slight-slip rotation control at step S30 has been completed (i.e., the instant t₂ in FIG. 3).

The control is then terminated as it is, until it is judged that the learning-control conditions of the slight-slip (SLo)-causing lockup pressure are satisfied, to thereby continue the targeted slight-slip rotation control of step S30. When the learning conditions are satisfied, stage=4 is established in step S35 so as to indicate termination of the targeted slight-slip rotation control. The control proceeds to step S36 where it is judged whether or not the air conditioner switch 28 is ON or OFF. If it is judged in step S36 that the air conditioner switch is ON (i.e., the air conditioner is under high load), the control proceeds to step S37 where the learned value of the slight-slip-causing lockup pressure for the air conditioner operating state is updated. If it is judged in step S36 that the air conditioner switch is OFF (i.e., the air conditioner is under low load), the control proceeds to step S38 where the learned value of the slight-slip-causing lockup pressure for the air conditioner non-operating state is updated. The slight-slip-causing lockup pressure for the air conditioner operating state or air conditioner non-operating state is exemplarily indicated as Psp in FIG. 3.

After completion of the learning-control as explained above, the control proceeds to step S39 where a newly required minimum lockup pressure P_{MIN(NEW)} shown in FIG. 3 is given, which is obtained by adding the predetermined value α for bringing the slip rotation to zero to the learned value. Since stage=4 is established in step S35, the control is terminated as it is at step S33, so as to continue the coasting lockup control.

Meanwhile, although the lockup state is maintained even during coasting of the vehicle so as to extend duration of the fuel cutoff, the lockup pressure P_{L/U} during coasting of the vehicle is brought to the required minimum lockup pressure P_{MIN(NEW)} obtained by adding the predetermined value α to the slight-slip-causing lockup pressure Psp. Thus, when it becomes necessary to cancel the coasting lockup so as to prevent engine stalling which otherwise would be caused, e.g., by wheel locking due to sudden deceleration from instant t₃ in FIG. 3, it is possible quickly to cancel the lockup and thereby avoid engine stalling.

Additionally, the learned values of the slight-slip-causing lockup pressure Psp to be used for obtaining the required minimum lockup pressure P_{MIN(NEW)} are separately stored for the air conditioner operating state and the non-operating state, respectively. Thus, even assuming that the other conditions are the same, the learned value of the slight-slip-causing lockup pressure Psp in the air conditioner operating state is higher than the learned value of the slight-slip-causing lockup pressure Psp in the air conditioner non-operating state, by the difference value of the coast torque, so that the required minimum lockup pressure P_{MIN(NEW)} in the air conditioner operating state (high load condition) also is higher than that in the air conditioner non-operating state (low load condition).

In the lockup control system according to the first embodiment explained above with reference to FIGS. 2 and 3, the coasting lockup capacity is controlled corresponding to the operation load of the air conditioner, and it is thus possible to eliminate various problems arising from inadequately determined coasting lockup capacity of the torque converter, as follows.

Namely, when the air conditioner is operating under high load condition and the reverse driving torque (coasting torque) directed from the driving wheels toward the engine is large during coasting of the vehicle, the coasting lockup capacity is correspondingly increased to a level sufficient to prevent slipping of the torque converter under the coasting torque, so as to ensure reverse driving of the engine by the driving wheels to delay lowering of the engine revolution speed and thereby achieve the primary function of extending the duration of fuel cutoff to enhance the fuel saving effect.

On the contrary, when the air conditioner is operating under low load condition and the reverse driving torque is small during coasting of the vehicle, the coasting lockup capacity is correspondingly decreased to a level that allows a timely lockup cancellation upon wheel locking, thereby achieving the primary function to prevent engine stalling. Furthermore, the decreased coasting lockup capacity serves to prevent engine torque fluctuation from being directly transmitted to the driving wheels, thereby preventing generation of shocks in the power train and maintaining the driving comfort.

Furthermore, in the first embodiment, the coasting lockup pressure is the required minimum lockup pressure P_{MIN} (=P_{MIN(NEW)}) obtained by adding the estimated value α for bringing the slip rotation to zero to the lockup pressure Psp at the time when the slip rotation SL becomes the predetermined slight-slip rotation SLo. Thus, not only the duration of fuel cutoff can be extended by virtue of the lockup of the torque converter during coasting of the vehicle, but also it is possible quickly to cancel the lockup and avoid engine stalling upon wheel locking, in a reliable manner without being affected by aging of the torque converter.

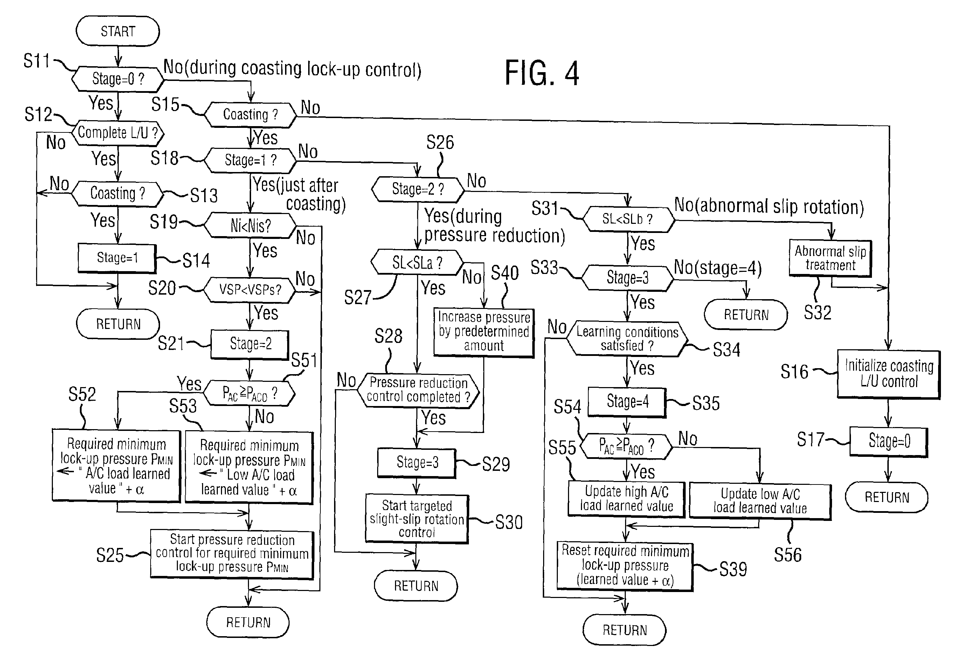

Moreover, in the first embodiment, the degree of the air conditioner load is judged based on the ON/OFF state of the air conditioner switch 28. However, it is alternatively possible to judge the degree of the air conditioner load based on the compressor internal pressure P_{AC} detected by the compressor pressure sensor 29 as indicated by imaginary line in FIG. 1. In this instance, the coasting lockup control may be executed by the second embodiment of the lockup control program shown in FIG. 4, wherein same reference numerals denote the same steps in FIG. 2.

The second embodiment shown in FIG. 4 is essentially the same as the previous embodiment of FIG. 2, with the exception that step S22 through step S24 in FIG. 2 are replaced by step S51 through step S53, and step S36 through step S38 in FIG. 2 are replaced by step S54 through step S56. Thus, for the sake of simplicity, the following explanation will be focused to these steps.

First, in step S51, it is judged whether the air conditioner operation load is high or low, based on whether or not the compressor internal pressure P_{AC} is equal to or greater than a predetermined pressure P_{AC0}. If it is judged in step 51 that P_{AC}≥ P_{AC0}, the control proceeds to step S52 where the required minimum lockup pressure P_{MIN} is a obtained by adding the predetermined value α to a learned slight-slip-causing lockup pressure value for the air conditioner high load condition among the learned lockup pressures. On the contrary, if it is judged in step 51 that P_{AC}<P_{AC0}, the control proceeds to step S53 where the required minimum lockup pressure P_{MIN} is obtained by adding the predetermined value α to a learned slight-slip-causing lockup pressure value for the air conditioner low load condition among the learned lockup pressures. In either case, the control proceeds to step 25 where the pressure reduction control is started to reduce the lockup pressure toward the required minimum lockup pressure P_{MIN} obtained as explained above.

Similarly, it is also judged in step 54 whether the air conditioner operation load is high or low, based on whether or not the compressor internal pressure P_{AC} is equal to or greater than the preset pressure P_{AC0}. If it is judged in step 54 that P_{AC}≥P_{AC0}, the control proceeds to step S55 where the learned value of the slight-slip-causing lockup pressure for air conditioner high load condition is updated. On the contrary, if it is judged in step S54 that P_{AC}<P_{AC0}, the control proceeds to step S56 where the learned value of the slight-slip-causing lockup pressure for air conditioner low load condition is updated. In either case, the control proceeds to step S39 where a newly required minimum lockup pressure is given.

In the second embodiment shown in FIG. 4, the coast lockup pressure is controlled depending upon whether the air conditioner is operating under high load condition or under low load condition. However, it is additionally possible to determine the required minimum lockup pressure so as to continuously follow the change of the compressor internal pressure P_{AC}, thereby allowing an even more precise control.

In connection with the above-mentioned embodiments, there has been described a situation where the torque converter is maintained in the complete lockup state even after the transfer from the complete lockup state to the coasting lockup state by releasing the accelerator pedal. However, the basic concept of the present invention can also be applied to a lockup control system for a torque converter, which allows a slipping engagement of the input and output elements of the torque converter under a controlled manner, for maintaining the torque converter in a slip controlled state.

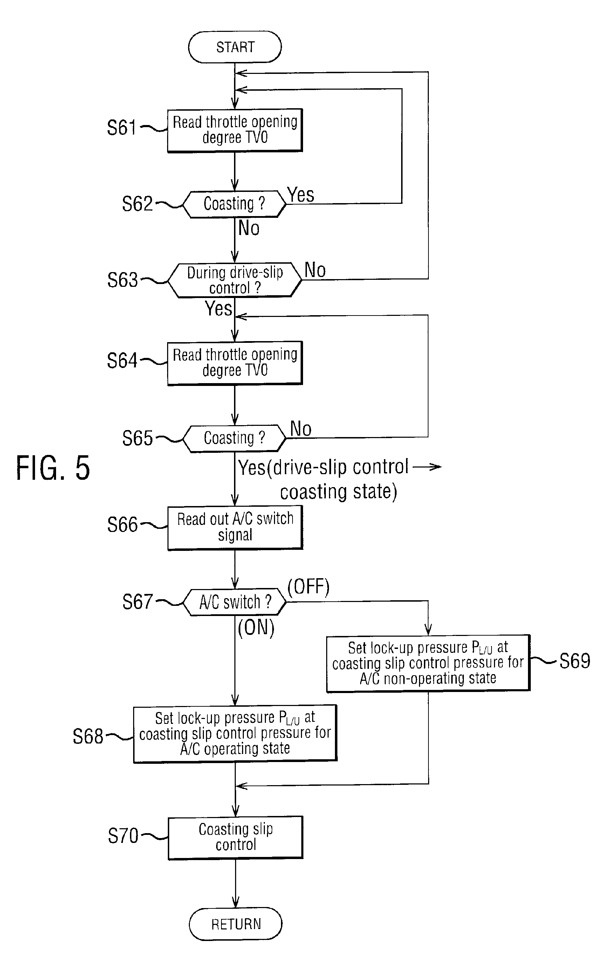

FIG. 5 shows a third embodiment for such advanced application, wherein the throttle opening degree TVO is read in step S61. In next step S62, it is judged whether or not the vehicle is coasting, based on the throttle opening degree TVO. If it is judged in step S62 that the vehicle is not coasting, the control proceeds to step S63 where it is judged whether or not the current condition is during the slip-control in a driving state of the vehicle with the accelerator pedal depressed. Namely, in step S61 through step S63, it is determined whether the current condition is the slip-control state or otherwise. When it is judged in these steps that the current condition is not the slip-control state, the detection of the drive-slip control state is continued until the drive-slip control state is brought about. Only after the drive-slip control state has been detected, does the control proceed to step S64.

After the throttle opening degree TVO is read in step S64, the control proceeds to step S65 where it is judged whether or not the vehicle is coasting, based on the throttle opening degree TVO. If it is judged in step 65 that the vehicle is not coasting, the judgment in steps S64 and S65 is repeated until the coasting state of the vehicle is brought about. Only after the coasting state of the vehicle is detected, i.e., if it is judged that the drive-slip control as judged at step S61 through step S63 has transferred to the coasting state as judged at step S64 and step S65, the control proceeds to step S66 and successive steps to thereby conduct the coasting slip control as follows.

After the signal from the air conditioner switch 28 is read out in step S66, and the ON/OFF state of the air conditioner switch 28 is judged in step S67. If the air conditioner switch 28 is ON (high load condition of the air conditioner), the control proceeds to step S68 where the lockup pressure P_{L/U} is set to a relatively high coasting slip control pressure for the air conditioner operating state. On the contrary, if the air conditioner switch 28 is OFF (low load condition of the air conditioner), the control proceeds to step S69 where the lockup pressure P_{L/U} is set at a relatively low coasting slip control pressure for the air conditioner non-operating state. In any case, the control proceeds to step S70 where the coasting slip control is conducted based on the coasting slip control pressure obtained in step S68 or step S69.

In the third embodiment also, the lockup pressure P_{L/U} is made higher when the air conditioner switch 28 is ON (high load condition of the air conditioner) than when the air conditioner switch is OFF (low load condition of the air conditioner), thereby achieving essentially the same functions and effects as the previous embodiments.

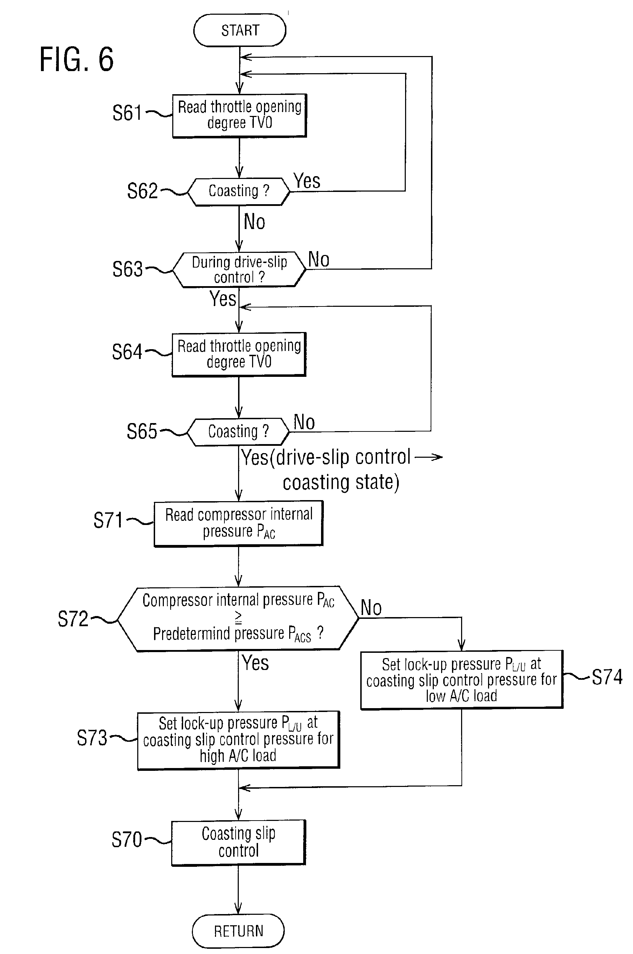

FIG. 6 shows a fourth embodiment of the present invention, which is essentially the same as previous embodiment of FIG. 5, with the exception that step S66 through step S69 in FIG. 5 are replaced by step S71 through step 74. Thus, for the sake of simplicity, the following explanation will be focused on these steps.

First, after the compressor internal pressure P_{AC} of the air conditioner is read out in step S71, the control proceeds to step S72 where it is judged whether or not the air conditioner operation load is high or low, based on whether or not the compressor internal pressure P_{AC} is equal to or greater than the preset pressure P_{ACs}. If it is judged in step S72 that P_{AC}≥P_{ACs} and the air conditioner is operating under high load condition, the control proceeds to step S73 where the lockup pressure P_{L/U} is set at a relatively high coasting slip control pressure. On the contrary, if it is judged in step S72 that P_{AC}<P_{ACs} and the air conditioner is operating under low load condition, the control proceeds to step S74 where the lockup pressure P_{L/U} is set at a relatively low coasting slip control pressure.

In the fourth embodiment also, the lockup pressure P_{L/U} is made higher when the air conditioner switch 28 is ON (high load condition of the air conditioner) than when the air conditioner switch is OFF (low load condition of the air conditioner), thereby achieving essentially the same functions and effects as the previous embodiments.

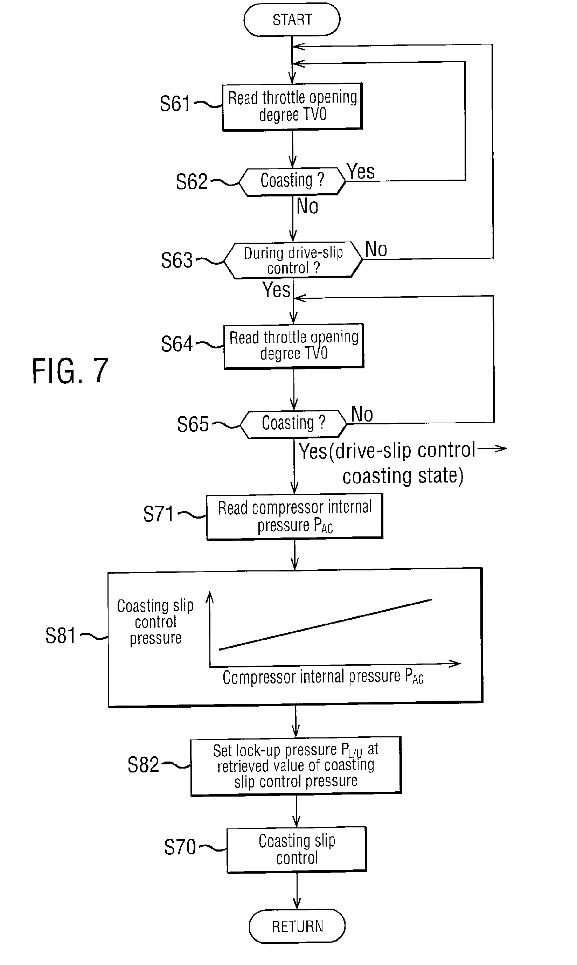

FIG. 7 shows a fifth embodiment of the present invention, which is essentially the same as previous embodiment of FIG. 6, with the exception that step S72 through step S74 in FIG. 6 are replaced by step S81 and step 82. Thus, for the sake of simplicity, the following explanation will be focused on these steps.

First, the coasting slip control pressure is retrieved in step S81 from a scheduled map, based on the compressor internal pressure P_{AC} read out in step S71. As shown in the block of step S81 in FIG. 7, the coasting slip control pressure is determined to continuously increase as the compressor internal pressure P_{AC} increases. The control then proceeds to step S82 where the lockup pressure P_{L/U} is set at the coasting slip control pressure retrieved at step S81, thereby contributing to the coasting slip control at step S70.

In the fourth embodiment also, the lockup pressure P_{L/U} is made higher when the air conditioner switch 28 is ON (high load condition of the air conditioner) than when the air conditioner switch is OFF (low load condition of the air conditioner), thereby achieving essentially the same functions and effects as the previous embodiments.

While the present invention has been described above with reference to specific embodiments shown in the accompanying drawings, they were presented for illustrative purpose only, and various changes or modifications may be made without departing from the scope of the invention as defined by the appended claims.

## Claims

1. A lockup control system for a torque converter of a vehicle equipped with an air conditioner, said lockup control system being adapted to maintain a coasting slip restricted state of the torque converter even during coasting of the vehicle with an accelerator pedal released, for restricting slip rotation between input and output elements of the torque converter, the coasting slip restricted state being achieved by a coasting lockup capacity that is lower than a lockup capacity of the torque converter in a driving condition of the vehicle with the accelerator pedal depressed, wherein the coasting lockup capacity is controlled according to an operation load of the air conditioner and is increased as the operation load of the air conditioner increases.

2. A lockup control system according to claim 1, wherein the slip restricted state is a lockup state of the torque converter, in which the slip rotation between the input and output elements of the torque converter is set to zero, and wherein the coasting lockup capacity is a required minimum lockup capacity obtained by adding an estimated value for bringing the slip rotation to zero, to a lockup capacity with which the slip rotation becomes a predetermined slight-slip rotation.

3. A lockup control system according to claim 2, wherein the lockup capacity with which the slip rotation becomes the predetermined slight-slip rotation is stored as a learned value for each operation load of the air conditioner, so as to be used as basis for calculation of the required minimum lockup capacity.

4. A coast control system according to claim 1, wherein the slip restricted state is a slip controlled state of the torque converter, in which the slip rotation between the input and output elements of the torque converter is controlled to be a slip rotation other than zero, corresponding to an operating state of the vehicle, and wherein the coasting lockup capacity is increased corresponding to increase in operation load of the air conditioner, when a coasting slip control of the torque converter with the accelerator pedal released is transferred from a driving slip control with the accelerator pedal depressed.
